# EUROPÄISCHE PATENTANMELDUNG

(11) **EP 3 556 476 A1**
(43) Veröffentlichungstag der Anmeldung: **23.10.2019**
(21) Anmeldenummer: 19168634.4
(22) Anmeldetag: 11.04.2019
(51) Int. Cl.: B05C 1/02, B05C 1/08, B05C 9/06, B05C 13/02, B32B 39/00

(54) **VORRICHTUNG ZUM AUFTRAGEN EINES HAFTMITTELS SOWIE VERFAHREN**

(30) Priorität: 17.04.2018 DE 102018205802
(71) Anmelder: HOMAG GmbH, 72296 Schopfloch (DE)
(72) Erfinder: Huber, Reinhard, 72250 Freudenstadt (DE)
(74) Vertreter: Hoffmann Eitle

(57) **Zusammenfassung**

Die Erfindung betrifft eine Vorrichtung zum Auftragen eines Haftmittels auf ein Werkstück, mit der insbesondere plattenförmige Werkstücke mit einem Haftmittel versehen werden können. Insbesondere ist die Vorrichtung zum Auftragen eines Haftmittels auf einer Breitfläche eines Werkstücks geeignet. Dabei umfasst die Vorrichtung eine Haftmittelauftragseinrichtung, die entlang einer Auflageeinrichtung bewegbar ist.

## Beschreibung

### Technisches Gebiet

Die Erfindung betrifft eine Vorrichtung zum Auftragen eines Haftmittels auf ein Werkstück, mit der insbesondere plattenförmige Werkstücke mit einem Haftmittel versehen werden können. Insbesondere ist die Vorrichtung zum Auftragen eines Haftmittels auf einer Breitfläche eines Werkstücks geeignet. Derartige Werkstücke können aus Holz, Holzwerkstoffen und/oder Verbundmaterial gefertigt sein. Bei einem solchen Werkstück kann es sich bspw. um eine Küchenarbeitsplatte, um eine Möbelfront, um ein Einlagebrett, oder Ähnliches handeln. Ferner betrifft die Erfindung ein Verfahren zum Auftragen eines Haftmittels auf ein Werkstück.

### Stand der Technik

Es sind Vorrichtungen bekannt, bei denen ein zu beschichtendes Werkstück zwischen einer Auftragswalze und einer Dosierwalze auf der einen Seite und einer Gegendruckwalze auf der anderen Seite hindurch geführt wird. Die Dosierwalze ist dabei derart nahe an der Auftragswalze angeordnet, dass zwischen der Dosierwalze und der Auftragswalze ein Spalt ausgebildet wird. Oberhalb des Spalts ist zwischen der Dosierwalze und Auftragswalze ein Haftmittelreservoir vorgesehen, das im Betrieb der Haftmittelauftragseinrichtung mit Haftmittel befüllt wird. Durch die Drehbewegung der Auftragswalze und der Dosierwalze wird das Haftmittel durch den zwischen diesen Balken ausgebildeten Spalt gefördert und mittels der Auftragswalze auf ein Werkstück aufgetragen.

Allerdings erfordern die bekannten Vorrichtungen einen relativ großen Platzbedarf, um Werkstücke auf eine Fördereinrichtung aufzulegen und nach dem Aufbringen des Haftmittels die Werkstücke einer weiteren Verarbeitung zuzuführen.

### Gegenstand der Erfindung

Es ist ein Ziel der vorliegenden Erfindung, eine Vorrichtung zum Auftragen eines Haftmittels auf ein Werkstück bereitzustellen, die vergleichsweise kompakt ausgestaltet ist.

Der Gegenstand des Anspruchs 1 stellt eine entsprechende Vorrichtung bereit. Weitere bevorzugte Ausführungsformen werden in den abhängigen Ansprüchen beschrieben. Ferner betrifft die Erfindung ein Verfahren.

Der Erfindung liegt der Gedanke zu Grunde, gegenüber den bekannten Vorrichtungen zum Auftragen eines Haftmittels einen vollkommen neuen Ansatz zu wählen, und die Haftmittelauftragseinrichtung bewegbar auszubilden. Somit kann das mit dem Haftmittel zu versehende Werkstück gemäß einer Ausführungsform der Erfindung während des Auftragens des Haftmittels in einer bestimmten Position gehalten werden.

Die Vorrichtung zum Auftragen eines Haftmittels auf ein Werkstück, insbesondere einer Breitfläche/Breitseite eines Werkstücks, weist auf: eine Auflageeinrichtung zum Aufnehmen eines Werkstücks und eine Haftmittelauftragseinrichtung, wobei die Haftmittelauftragseinrichtung eine Auftragswalze zum Auftragen eines Haftmittels auf dem an der Auflageeinrichtung aufgenommenen Werkstück und eine erste Dosiereinrichtung zum Dosieren des Haftmittels an der Auftragswalze aufweist. Ferner ist die Haftmittelauftragseinrichtung entlang der Auflageeinrichtung bewegbar.

Durch die erfindungsgemäße Vorrichtung wird eine platzsparende Konstruktion bereitgestellt, mit der ein hohes Qualitätsniveau des Haftmittelauftrags gewährleistet werden kann. Insbesondere wird es durch die Beweglichkeit der Haftmittelauftragseinrichtung ermöglicht, ein Werkstück stationär und zumindest zeitweise stationär zu halten, wodurch Förderstrecken für das Werkstück reduziert werden.

Die Vorrichtung hat den Vorteil, dass das Haftmittel durch die Haftmittelauftragseinrichtung gleichmäßig aufgetragen werden kann. Dabei kann die Haftmittelauftragseinrichtung über das Werkstück hinweg fahren. Die Haftmittelauftragseinrichtung kann mittels präziser Führungssystem entlang der Auflageeinrichtung geführt werden. Es ist ferner in einer Ausführungsform möglich, dass die Haftmittelauftragseinrichtung in einer Rückwärtsbewegung bewegt werden kann.

Die Auftragswalze ist bevorzugt derart ausgebildet, dass das Haftmittel durch die Auftragswalze auf der Breitfläche eines insbesondere plattenförmigen Werkstücks aufgebracht werden kann.

In einer Ausführungsform der Erfindung ist es vorgesehen, dass die erste Dosiereinrichtung als Dosierwalze ausgebildet ist. In diesem Zusammenhang ist es ferner bevorzugt, dass die Dosierwalze eingerichtet ist, mit der Auftragswalze ein Haftmittelreservoir auszubilden. Eine Dosierwalze hat sich für einen wartungsarmen Verfahrensablauf bewährt.

Gemäß weiteren Ausführungsformen kann die Dosiereinrichtung als eine Dosierrakel oder feststehendes Dosierelement ausgebildet sein.

Die Haftmittelauftragseinrichtung kann eine Plattenreinigungseinheit aufweisen.

Es ist bevorzugt, dass die Auflageeinrichtung eine Halteeinrichtung, insbesondere eine Unterdruckeinrichtung, mit der ein Halten des Werkstücks an der nicht mit Haftmittel zu versehenden Fläche ermöglicht wird, einen Greifer oder eine Klemmbacke zum Halten des Werkstücks aufweist. Mit einem Greifer oder einer Klemmbacke kann das Werkstück an einem nicht mit Haftmittel zu versehenden Bereich oder an den Schmalflächen gehalten werden. Mit der Halteeinrichtung kann das Werkstück zumindest zeitweise fixiert werden.

Es kann vorgesehen sein, dass die Haftmittelauftragseinrichtung relativ zur Auflageeinrichtung anhebbar oder absenkbar ist. In diesem Zusammenhang ist es weiter bevorzugt, dass zum Anheben oder Absenken eine pneumatisch betriebene oder hydraulisch betriebene Einrichtung vorgesehen ist. Eine pneumatisch betriebene Einrichtung ist relativ kostengünstig und führt somit zu reduzierten Gesamtkosten. Eine hydraulisch betriebene Einrichtung bietet ein erhöhtes Maß an Präzision.

Gemäß einer weiteren Variante umfasst die Vorrichtung eine Presseinrichtung zum Anpressen des Beschichtungsmaterials an dem an der Auflageeinrichtung aufgelegten Werkstück. Somit wird der Haftmittelauftrag und das Aufbringen einer Beschichtung auf die mit Haftmittel versehene Werkstückseite, insbesondere die Breitfläche, in einer Vorrichtung kombiniert.

Dabei ist es ferner bevorzugt, dass die Presseinrichtung zum Anpressen des Beschichtungsmaterials entlang der Auflageeinrichtung bewegbar ist. Auf diese Weise kann eine besonders platzsparende Konstruktion bereitgestellt werden.

Durch die Bewegbarkeit der Presseinrichtung und der Haftmittelauftragseinrichtung entlang der Auflageeinrichtung kann auf geringstem Platz ein Werkstück verarbeitet werden. Insbesondere sind ein Haftmittelauftrag und ein Aufbringen eines Beschichtungsmaterials kurz hintereinander möglich. Das Werkstück kann währenddessen an einer Position bleiben. Ferner kann selektiv ein Haftmittel oder ein Beschichtungsmaterial aufgebracht, oder beide Vorgänge an einem Werkstück durchgeführt werden.

Beispielsweise kann folgender Verfahrensablauf umgesetzt werden: Auflegen des zu beschichtenden Werkstücks und ggf. Fixieren des Werkstücks, hiernach Bewegen der Haftmittelauftragseinrichtung über das Werkstück.

Zum Zurückfahren kann die Haftmittelauftragseinrichtung ausgehoben werden und zur Ausgangsposition zurück bewegt werden. Danach kann eine rollbare Auflegevorrichtung über das mit Haftmittel versehene Werkstück gespannt werden. Nachfolgend wird darauf ein Beschichtungsmaterial aufgelegt und ausgerichtet. Nachdem die Längskante des Beschichtungsmaterials auf das Werkstück angedrückt worden ist und kantengenau liegt, zieht sich das einrollbare Auflegevorrichtung zurück.

Das ruhende Werkstück, welches mit Haftmittel versehen wurde, als auch das bereits anhaftende Laminat bleiben zurück, und werden zusammengefügt. Danach bewegt sich die Presseinrichtung horizontal über das Beschichtungsmaterial und das darunter liegende Werkstück. Der abrollende Walzendruck drückt dieses gleichmäßig auf das Substrat.

In einer Ausführungsform umfasst die Vorrichtung eine Auflegevorrichtung zum Auflegen eines Beschichtungsmaterials auf das Werkstück. Dabei ist es bevorzugt, dass die Auflegevorrichtung in ein Gehäuse einrollbar ist, wobei ferner bevorzugt ist, dass das Gehäuse an der Haftmittelauftragseinrichtung angebracht ist. Somit wird die Flexibilität der Vorrichtung weiter gesteigert, wobei weiterhin eine kompakte Konstruktion bereitgestellt wird.

Es ist bevorzugt, dass die Auflegevorrichtung, seitlich betrachtet, gegenüber der Auflageeinrichtung, auf der das Werkstück aufgenommen ist, eine schräge oder geneigte Ebene ausbildet. Durch die definierte Neigung der Auflegevorrichtung, mit der ein Beschichtungsmaterial einem mit Haftmittel versehenen Werkstück zugeführt werden kann, verhindert das Auftreten von Luftblasen zwischen dem Beschichtungsmaterial und dem Werkstück.

In diesem Zusammenhang ist es ferner bevorzugt, dass die Auflegevorrichtung mit der Haftmittelauftragseinrichtung und der Presseinrichtung in Verbindung steht, so dass eine platzsparende Vorrichtung vorgesehen wird.

Gemäß einer weiteren Ausführungsform kann die Vorrichtung eine Wendevorrichtung umfassen, die eingerichtet ist, ein Werkstück um 180° zu drehen, wobei die Wendevorrichtung bevorzugt eingerichtet ist, das Werkstück in Richtung der Haftmittelauftragseinrichtung zu bewegen. Somit kann das Werkstück, das an einer Seite mit einem Haftmittel und ggf. mit einer Beschichtung an der mit Haftmittel beaufschlagten Seite versehen wurde, von einer Breitfläche zur weiteren Breitfläche umgedreht werden, so dass eine Bearbeitung gemäß einem der vorangegangenen Aspekte an der weiteren Breitfläche des Werkstücks durchgeführt werden kann. Dies führt zu einem zügigen Verfahrensablauf und vermeidet Stillstandzeiten der Vorrichtung. Durch die Integration der Wendevorrichtung in die zuvor genannte Vorrichtung wird eine platzsparende Konstruktion bereitgestellt, wobei durch die Möglichkeit des zügigen Wechsels der Werkstückseite durch ein Wenden mit der Wendevorrichtung eine hohe Bearbeitungsqualität gewährleistet wird.

Ferner ist es bevorzugt, dass die Haftmittelauftragseinrichtung eine zweite Dosiereinrichtung, insbesondere zweite Dosierwalze, aufweist, wobei bevorzugt ist, dass die zweite Dosiereinrichtung eingerichtet ist, mit der Auftragswalze ein zweites Haftmittelreservoir auszubilden. Somit kann die Bearbeitungsrichtung zum Auftrag des Haftmittels geändert werden, wodurch die Vorrichtung ein hohes Maß an Flexibilität bei gleichzeitig kompakter Bauweise der Vorrichtung gewährleistet.

Ferner betrifft die Erfindung ein Verfahren zum Auftragen eines Haftmittels auf einem Werkstück, insbesondere auf einer Breitfläche des Werkstücks. Im Rahmen des Verfahrens kann eine Vorrichtung gemäß einem der vorangegangenen Aspekte zum Einsatz kommen.

Das Verfahren umfasst die Schritte: Aufnehmen eines Werkstücks auf einer Auflageeinrichtung, wobei eine Haftmittelauftragseinrichtung bereitgestellt wird, die
eine Auftragswalze zum Auftragen eines Haftmittels auf dem am Auflagetisch aufgenommenen Werkstück, und eine erste Dosiereinrichtung zum Dosieren des Haftmittels an der Auftragswalze aufweist, sowie Bewegen der Haftmittelauftragseinrichtung entlang der Auflageeinrichtung. Bezüglich der Vorteile des Verfahrens wird auf die zur Vorrichtung bereits erläuterten Vorteile verwiesen.

Dabei kann es vorgesehen sein, dass die erste Dosiereinrichtung als Dosierwalze ausgebildet ist, die bevorzugt eingerichtet ist, mit der Auftragswalze ein Haftmittelreservoir auszubilden. Eine Dosierwalze hat sich für einen wartungsarmen Verfahrensablauf bewährt.

Es ist bevorzugt, dass im Rahmen des Verfahrens die Haftmittelauftragseinrichtung vor dem Auftragen des Haftmittels relativ zur Auflageeinrichtung angehoben oder abgesenkt wird, wobei bevorzugt ist, dass zum Anheben oder Absenken eine pneumatisch betriebene Einrichtung vorgesehen ist. Somit kann die Haftmittelauftragseinrichtung auf die Werkstückdicke und ggf. andere Randbedingungen eingestellt werden, so dass ein qualitativ hochwertiger Haftmittelauftrag gewährleistet wird.

Es ist ferner bevorzugt, dass ein Beschichtungsmaterial auf die mit dem Haftmittel versehene Seite, insbesondere Breitfläche, des Werkstücks aufgebracht wird. Hierbei kann sich das Haftmittel in einem aktivierten Zustand befinden, so dass das Beschichtungsmaterial mit dem Werkstück verbunden wird.

In einer weiteren Variante des Verfahrens ist es vorgesehen, dass zum Aufbringen des Beschichtungsmaterials eine Presseinrichtung verwendet wird. Dabei ist es ferner bevorzugt, dass die Presseinrichtung zum Anpressen des Beschichtungsmaterials entlang der Auflageeinrichtung bewegbar ist. Entsprechend kann eine besonders kompakte Konstruktion bereitgestellt werden.

Gemäß einer weiteren Ausführungsform kann das mit dem Beschichtungsmaterial versehene Werkstück mittels einer Wendevorrichtung um 180° gedreht werden und ggf. einem weiteren Haftmittelauftrag zugeführt werden.

Es ist bevorzugt, dass das Werkstück zumindest abschnittsweise aus Holz, Holzwerkstoff oder Verbundmaterial gefertigt ist. Beispielsweise kann es sich um eine Küchenarbeitsplatte, um eine Möbelfront, um ein Einlagebrett, oder Ähnliches handeln.

Merkmale der zuvor genannten Vorrichtung können jeweils einzeln im Rahmen des Verfahrens zum Einsatz kommen. Auch kann die Vorrichtung eingerichtet sein, Merkmale des Verfahrens jeweils einzeln umzusetzen.

### Kurze Beschreibung der Zeichnungen

- Fig. 1a: zeigt eine Ausführungsform der erfindungsgemäßen Vorrichtung vor dem Auftragen eines Haftmittels auf ein Werkstück
- Fig. 1b: zeigt die in Fig. 1a dargestellte Vorrichtung während des Auftrags des Haftmittels auf das Werkstück
- Fig. 1c: zeigt die Vorrichtung gemäß der Ausführungsform der Erfindung nach dem Auftragen des Haftmittels auf das Werkstück
- Fig. 2a: ist eine schematische Ansicht einer zweiten Ausführungsform vor dem Beschichten eines Werkstücks.
- Fig. 2b: zeigt die Beschichtungsvorrichtung gemäß der zweiten Ausführungsform während des Haftmittelauftrags.
- Fig. 3a: zeigt die Beschichtungsvorrichtung gemäß der zweiten Ausführungsform während des Aufbringens des Beschichtungsmaterials.
- Fig. 3b: ist eine schematische Ansicht der Beschichtungsvorrichtung gemäß der zweiten Ausführungsform nach dem Aufbringen des Beschichtungsmaterials.
- Fig. 4a: zeigt eine dritte Ausführungsform der Erfindung vor Beginn des Haftmittelauftrags.
- Fig. 4b: zeigt die dritte Ausführungsform während des Haftmittelauftrags auf ein erstes Werkstück.
- Fig. 4c: zeigt die dritte Ausführungsform nach dem Haftmittelauftrag auf das erste Werkstück.
- Fig. 5a: zeigt die dritte Ausführungsform vor dem Haftmittelauftrag auf ein zweites Werkstück.
- Fig. 5b: zeigt die dritte Ausführungsform während des Haftmittelauftrags auf ein zweites Werkstück.
- Fig. 5c: zeigt die dritte Ausführungsform nach dem Haftmittelauftrag auf das zweite Werkstück.
- Fig. 6a: ist eine schematische Ansicht einer Wendevorrichtung, die mit einer der zuvor genannten Ausführungsformen zum Einsatz kommen kann.
- Fig. 6b: ist eine schematische Ansicht der Wendevorrichtung gemäß Fig. 6a, bei der ein gedrehtes Werkstück ausgefördert wird.

### Detaillierte Beschreibung der bevorzugten Ausführungsform

Anhand der beigefügten Figuren werden bevorzugte Ausführungsformen der Erfindung beschrieben, um die Erfindung anhand eines anschaulichen, jedoch nicht einschränkenden Beispiels zu erläutern. Merkmale der Ausführungsformen oder Modifikationen von Einzelmerkmalen können kombiniert werden, um weitere Ausführungsformen auszubilden.

Die Vorrichtung 1 zum Auftragen eines Haftmittels auf ein Werkstück gemäß der ersten Ausführungsform umfasst eine Haftmittelauftragseinrichtung 10 sowie eine Auflageeinrichtung 15, auf der das Werkstück zeitweise festgelegt werden kann. Beispielsweise wird das Werkstück W mittels Vakuum angesaugt oder mit Greifern oder Klemmbacken an der Auflageeinrichtung 15 gehalten.

Die Auflageeinrichtung 15 kann einen Fördermechanismus umfassen, um ein Werkstück W auf eine bestimmte Position auf der Auflageeinrichtung 15 zu bewegen.

Die Haftmittelauftragseinrichtung 10 weist eine Auftragswalze 11 auf, mit der ein Haftmittel auf einem Werkstück W, das an der Auflageeinrichtung 15 aufgelegt und gehalten ist, an einer Breitfläche/Breitseite dieses Werkstücks aufgetragen werden kann. Bevorzugt hat die Auftragswalze 11 eine gummierte Oberfläche.

Ferner umfasst die Haftmittelauftragseinrichtung 10 eine erste Dosierwalze 13 als Ausführungsform einer Dosiereinrichtung, die benachbart zur Auftragswalze 11 vorgesehen ist. Da die erste Dosierwalze 13 und die Auftragswalze 11 berührt oder lediglich ein geringer Abstand zwischen diesen ausgebildet ist, wird in dem sich verjüngenden Spalt zwischen der Auftragswalze 11 und der ersten Dosierwalze 13 ein Haftmittelreservoir L1 ausgebildet, in das ein Haftmittel eingeführt wird. Seitlich wird das Haftmittelreservoir durch nicht dargestellte Segmente begrenzt.

Es ist bevorzugt, dass die Auftragswalze 11 und die erste Dosierwalze 13 erwärmt werden, um das im sich verjüngenden Spalt zwischen der Auftragswalze 11 und der ersten Dosierwalze 13 vorliegende Haftmittel in einem fließfähigen Zustand zu halten.

Die Haftmittelauftragseinrichtung 10 ist entlang der Auflageeinrichtung 15 bewegbar. Gemäß einer weiteren Ausgestaltung kann die Haftmittelauftragseinrichtung 10 relativ zur Auflageeinrichtung 15 angehoben und abgesenkt werden, um den Abstand der Auftragswalze 11 zur Oberfläche der Auflageeinrichtung 15 einzustellen.

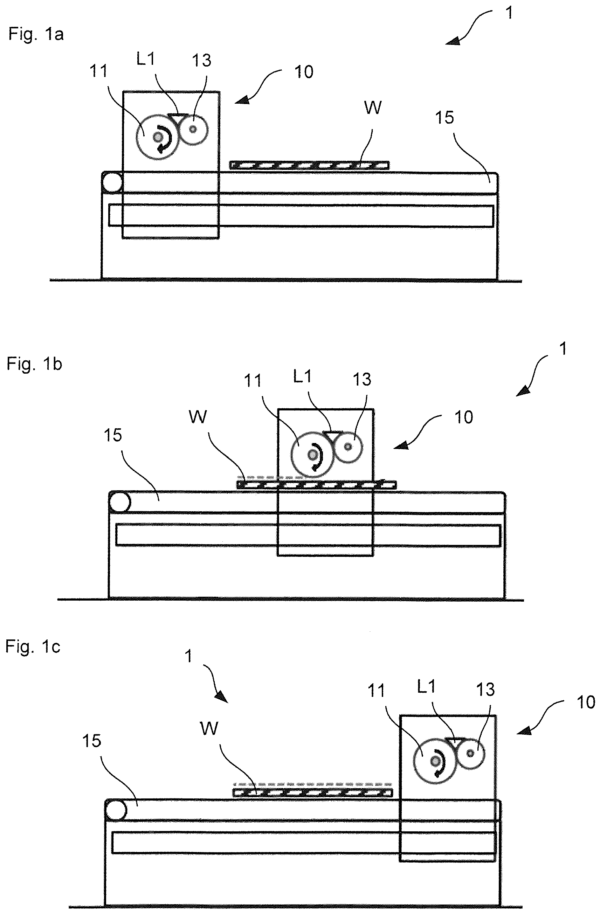

Anhand der Figuren 1a-1c wird ein Verfahrensablauf zum Auftragen eines Haftmittels auf ein Werkstück W anschaulich dargestellt.

Zunächst wird das Werkstück W auf die Auflageeinrichtung 15 aufgebracht und temporär gehalten. Vor dem Auftragen des Haftmittels wird die Auftragswalze 11 in eine Drehbewegung versetzt (in Fig. 1a im Uhrzeigersinn), wobei die erste Dosierwalze 13 gegenläufig hierzu bewegt wird. Durch den sich verjüngenden Spalt zwischen der Dosierwalze 13 und der Auftragswalze 11 wird ein dünner Haftmittelfilm auf der Auftragswalze 11 ausgebildet.

Zum Auftragen des Haftmittels auf das Werkstück W wird die Haftmittelauftragseinrichtung 10, die sich ggf. in einem angehobenen Zustand befindet, abgesenkt, sodass bei einer relativen Bewegung der Haftmittelauftragseinrichtung 10 entlang des Werkstücks W die Auftragswalze 11 an einer Breitfläche des Werkstücks W abrollt und im Zuge der Bewegung entlang des Werkstücks W das an der Auftragswalze 11 vorgesehene Haftmittel auf die Breitfläche des Werkstücks W überträgt. Nachdem die Haftmittelauftragseinrichtung 10 entlang des Werkstücks W bewegt wurde (Fig. 1c), kann das Werkstück W von der Auflageeinrichtung 15 entnommen oder alternativ an der Auflageeinrichtung 15 mit einem Beschichtungsmaterial, insbesondere einer Folie, versehen werden, die mittels des aufgetragenen Haftmittels eine Verbindung zum Werkstück W eingeht.

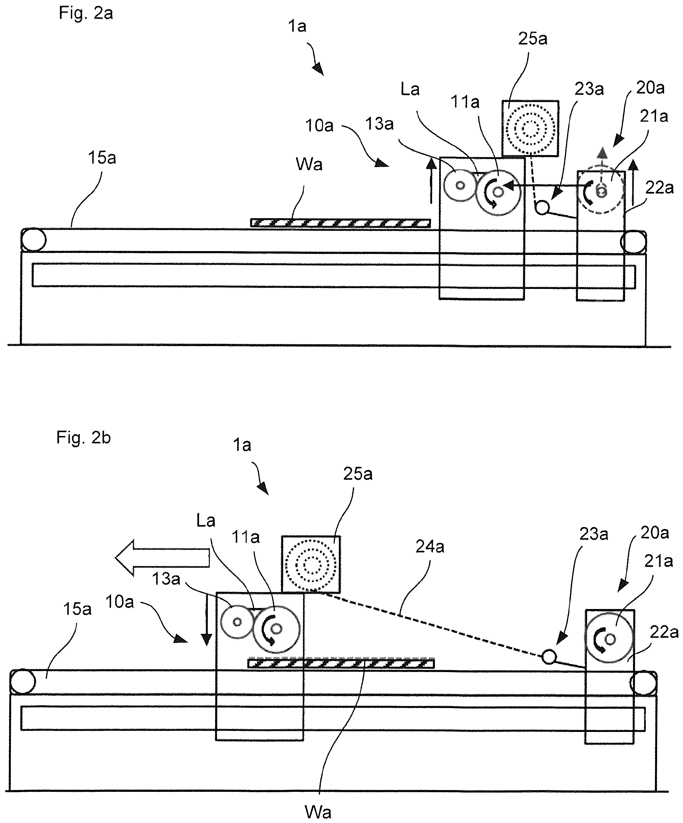

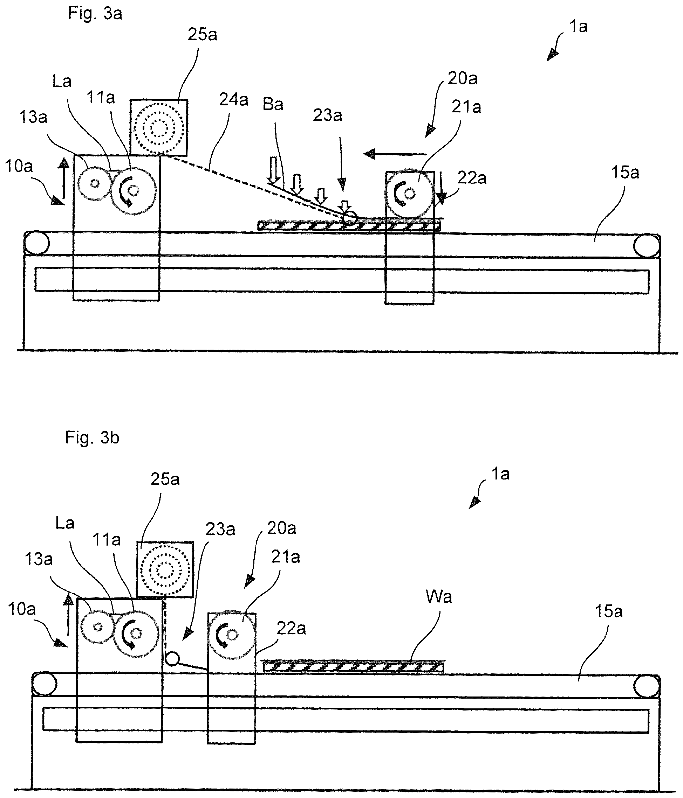

In den Figuren 2a, 2b und 3a, 3b wird eine zweite Ausführungsform dargestellt. Die Vorrichtung der zweiten Ausführungsform unterscheidet sich dadurch von der Vorrichtung der ersten Ausführungsform, dass eine Presseinrichtung 20a vorgesehen ist. Dabei ist sowohl die Auflageeinrichtung 10a als auch die Presseinrichtung 20a bewegbar. Zur Erläuterung der übrigen Elemente der der zweiten Ausführungsform wird ergänzend auch auf die obigen Erläuterungen zur ersten Ausführungsform verwiesen, um Wiederholungen zu vermeiden.

Die Haftmittelauftragseinrichtung 10a umfasst eine Auftragswalze 11a sowie eine Dosierwalze 13a, die benachbart zueinander angeordnet sind, um in dem sich verjüngenden Spalt zwischen der Auftragswalze 11a und der Dosierwalze 13a ein Haftmittelreservoir La auszubilden. Die Haftmittelauftragseinrichtung 10a ist entlang einer Auflageeinrichtung 15a der Beschichtungsvorrichtung 1a bewegbar. Darüber hinaus kann die Haftmittelauftragseinrichtung 10a in vertikaler Richtung angehoben oder abgesenkt werden, um die Auftragswalze 11a der Auflageseite der Auflageeinrichtung 15a anzunähern oder von dieser zu entfernen.

Die Presseinrichtung 20a ist umfasst ein Gehäuse 21a, eine Anpresswalze 22a sowie einen Auflagebereich 23a. Die Presseinrichtung 20a ist eingerichtet, ein Beschichtungsmaterial an einer Breitfläche eines Werkstücks aufzubringen.

An der Haftmittelauftragseinrichtung 10a ist ein Gehäuse 25a einer aufrollbaren Legevorrichtung vorgesehen. Die Auflegevorrichtung 24a, die im Gehäuse 25a aufgerollt werden kann, ist mit dem Auflagebereich 23a der Pressenrichtung 20a verbunden.

Nachfolgend wird ein Verfahrensablauf der Beschichtungsvorrichtung 1a der zweiten Ausführungsform erläutert.

Zunächst wird ein Werkstück Wa an der Auflageeinrichtung 15a aufgelegt oder in den Bereich der Auflageeinrichtung 15a gefördert. Das Werkstück Wa kann, ähnlich wie in der ersten Ausführungsform, temporär gehalten an der Auflageeinrichtung 15a werden.

Die Haftmittelauftragseinrichtung 10a wird ggf. angehoben oder abgesenkt, um die Auftragswalze 11 an der Dicke des an der Auflageeinrichtung 14a aufgelegten Werkstücks Wa auszurichten. Die Auftragswalze 11a dreht sich dabei entgegen des Uhrzeigersinns und wird während dieser Drehbewegung aus dem Haftmittelreservoir La mit einem Haftmittel benetzt.

Während die Presseinrichtung 20a zunächst in einer Position gehalten wird, wird die Haftmittelauftragseinrichtung 10a entlang des Werkstücks Wa bewegt, sodass die an der oberen Seite des Werkstücks Wa abrollende Auftragswalze 11a ein Haftmittel auf der oberen Seite des Werkstücks Wa aufbringt. Während der Bewegung der Haftmittelauftragseinrichtung 10a wird die Auflegevorrichtung 24a aus dem Gehäuse 25a ausgerollt, sodass diese eine geneigte Auflageebene ausbildet (Fig. 2b).

Auf die Auflegevorrichtung 24a wird ein Beschichtungsmaterial Ba aufgebracht, das über den Auflegebereich 23a der Presseinrichtung 20a an der oberen Seite des Werkstücks Wa angelegt und durch ein Bewegen der Presseinrichtung 20a entlang des Werkstücks Wa mittels der Anpresswalze 22a am Werkstück aufgepresst wird. Während der Bewegung der Presseinrichtung 20a wird die Auflagevorrichtung 24a wieder in das Gehäuse 25a eingerollt, sodass die Auflegevorrichtung 24a in einem gespannten Zustand gehalten wird.

Nachdem die Presseinrichtung 20a entlang des Werkstücks Wa geführt wurde und das Beschichtungsmaterial Ba an der oberen Seite des Werkstücks Wa aufgebracht wurde (Fig. 3b), kann das Werkstück von der Auflageeinrichtung 15a entnommen oder mittels einer an der Auflageeinrichtung 15a vorgesehenen Fördereinrichtung aus dem Bereich der Auflageeinrichtung 15a herausgefördert werden.

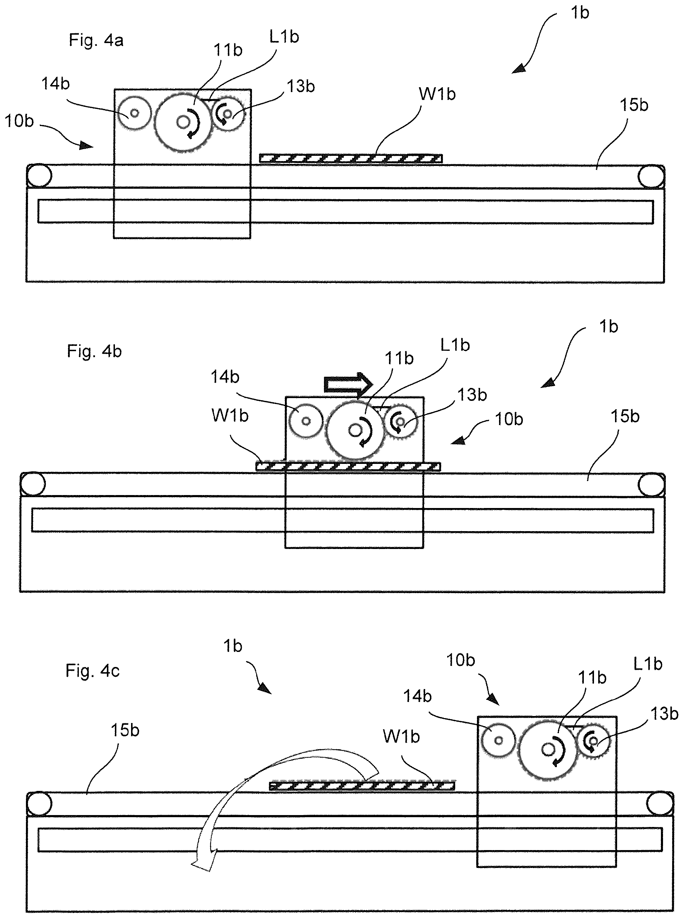

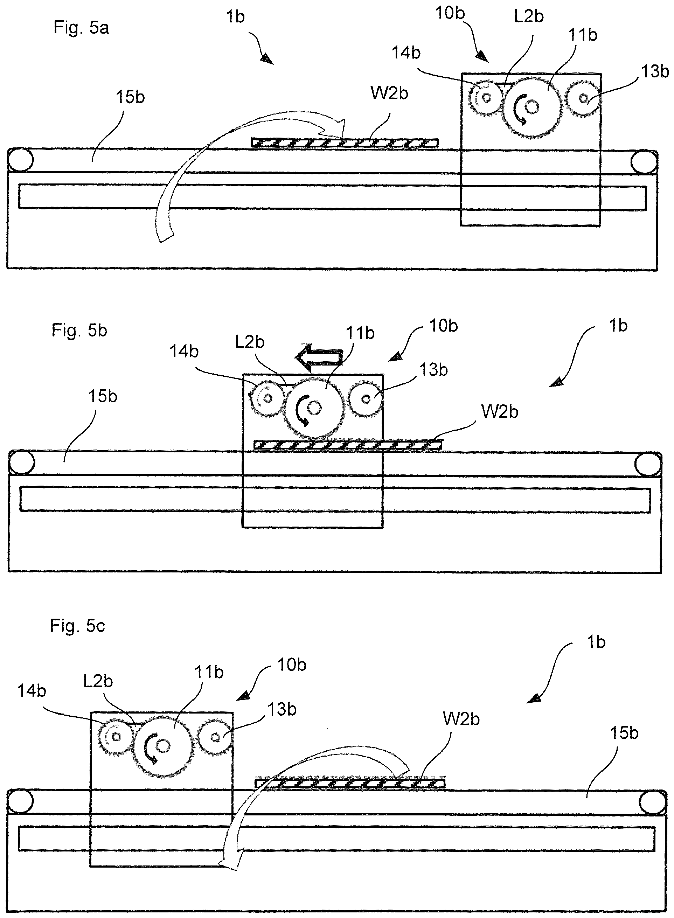

Anhand der Figuren 4a-4c sowie 5a-5c wird eine dritte Ausführungsform der Erfindung beschrieben.

Die dritte Ausführungsform einer Vorrichtung 1b unterscheidet sich dabei von der Vorrichtung 1 gemäß der ersten Ausführungsform darin, dass die Haftmittelauftragseinrichtung 10b gemäß der dritten Ausführungsform mit zwei Dosierwalzen ausgeführt ist.

Die Haftmittelauftragseinrichtung 10b umfasst eine Auftragswalze 11b sowie eine erste Dosierwalze 13b und eine zweite Dosierwalze 14b. Die Dosierwalzen sind benachbart zur Auftragswalze 11b angeordnet, und können wahlweise der Auftragswalze 11b angenähert werden. In Fig. 4a wird ein Betriebsmodus dargestellt, bei dem die erste Dosierwalze 13b der Auftragswalze 11b angenähert ist, um zwischen diesen ein erstes Haftmittelreservoir L1b auszubilden. Die zweite Dosierwalze 14b ist bei diesem Betriebsmodus von der Auftragswalze 11b beabstandet.

Die dritte Ausführungsform der Vorrichtung 1b umfasst ferner eine Auflageeinrichtung 15b (Auflagetisch), auf der ein Werkstück aufgelegt und insbesondere gehalten werden kann. Das Halten des Werkstücks kann über eine Klemm- oder Spanneinrichtung erfolgen (nicht dargestellt).

Nachfolgend wird ein Verfahrensablauf der Vorrichtung 1b gemäß der dritten Ausführungsform erläutert.

Die Haftmittelauftragseinrichtung 10b befindet sich in der in Fig. 4a dargestellten Situation in einem ersten Betriebsmodus. Nachdem ein erstes Werkstück W1b auf die Auflageeinrichtung 15b aufgelegt wurde, ist die Haftmittelauftragseinrichtung 10b bereit für einen Haftmittelauftrag. Hierbei ist die erste Dosierwalze 13b der Auftragswalze 11b angenähert, sodass zwischen diesen das erste Haftmittelreservoir L1b ausgebildet ist. Die Auftragswalze 11b dreht sich dabei im Uhrzeigersinn, wohingegen die erste Dosierwalze 13b entgegen des Uhrzeigersinns gedreht wird. Die zweite Dosierwalze 14b kann angehalten sein, im Leerlauf drehen und/oder von der Auftragswalze weg oder zu dieser hin bewegt werden.

Während sich die Auftragswalze 11b dreht, wird die Haftmittelauftragseinrichtung 10b entlang des am Auflagetisch 15b vorgesehenen Werkstücks bewegt. Die erste Dosierwalze 13b weist dabei in Fahrtrichtung der Haftmittelauftragseinrichtung 10b auf. Zwischen der Auflagefläche der Auflageeinrichtung 15b und der Auftragswalze 11b ist ein Spalt ausgebildet, der im Wesentlichen der Dicke des Werkstücks W1b entspricht. Während die Haftmittelauftragseinrichtung 10b entlang des Werkstücks W1b bewegt wird, rollt die Auftragswalze 11b auf einer Breitfläche des ersten Werkstücks W1b ab und trägt dabei das Haftmittel auf die Breitfläche des Werkstücks W1b auf.

Nachdem der Haftmittelauftrag auf das erste Werkstück W1b erfolgt ist (Fig. 4c), kann das erste Werkstück W1b von der Auflageeinrichtung 15b entnommen werden.

In einem weiteren Verfahrensschritt wird ein zweites Werkstück W2b auf die Auflageeinrichtung 15b aufgelegt (Fig. 5a). Ferner wird die erste Dosierwalze 13b von der Auftragswalze 11b weg bewegt und die zweite Dosierwalze 15b zur Auftragswalze 11b herangeführt. Somit wird zwischen der zweiten Dosierwalze 14b und der Auftragswalze 11b ein zweites Haftmittelreservoir L2b ausgebildet.

Ferner wird die Drehrichtung der Auftragswalze 11b geändert, sodass sich die Auftragswalze 11b entgegen des Uhrzeigersinns dreht. Die zweite Dosierwalze 14b dreht sich im Uhrzeigersinn. Die erste Dosierwalze 13b kann sich im Leerlauf drehen oder angehalten sein.

Zum Auftrag eines Haftmittels auf das zweite Werkstück W2b wird die Haftmittelauftragseinrichtung 10b entlang des an der der Auflageeinrichtung 15b vorgesehenen zweiten Werkstücks W2b geführt. Hierbei rollt die Auftragswalze 11b auf einer Breitfläche des zweiten Werkstücks W2b ab und trägt dabei das Haftmittel auf das zweite Werkstück W2b auf.

Nachdem das zweite Werkstück W2b mit dem Haftmittel versehen wurde, kann das zweite Werkstück W2b vom Auflagetisch 15b entnommen werden (Fig. 5c).

Nachdem die Werkstücke W1b, W2b mit Haftmittel versehen wurden, können die Werkstücke W1b, W2b jeweils auf der mit dem Haftmittel versehenen Seite des Werkstücks mit einem Beschichtungsmaterial, bspw. einer Folie, beschichtet werden.

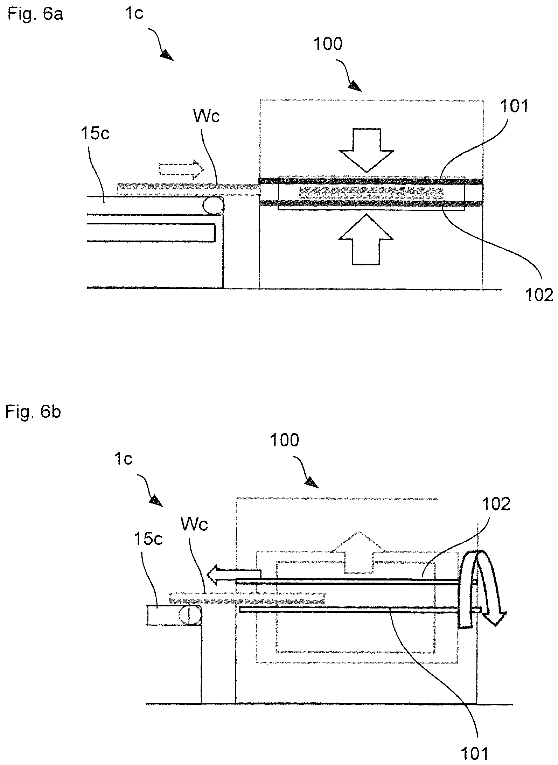

In Figuren 6a und 6b ist eine weitere Ausführungsform der Vorrichtung 1c dargestellt, die ähnlich wie die Vorrichtung 1 eine Auflageeinrichtung 15c aufweist. Bezüglich weiterer Elemente der Vorrichtung 1c, insbesondere der Haftmittelauftragseinrichtung, wird auf die zweite Ausführungsform verwiesen, wobei die Vorrichtung 1c auch mit Elementen der Vorrichtung 1 gemäß der ersten Ausführungsform oder der Vorrichtung 1b der zweiten Ausführungsform kombiniert werden kann.

Zusätzlich weist die Vorrichtung 1c eine Wendevorrichtung 100 auf, mit der ein Werkstück Wc um 180° gedreht werden kann. Hierzu wird das Werkstück von der Auflageeinrichtung 15c zur Wendevorrichtung 100 bewegt, so dass das Werkstück Wc zwischen die Halteelemente 101, 102 der Wendevorrichtung 100 gelangt. Die Halteelemente 101, 102 sind relativ zueinander bewegbar, um das Werkstück Wc zu klemmen.

Nachdem das Werkstück Wc geklemmt wurde, werden die Halteelemente 101, 102, und somit auch das Werkstück Wc, um 180° gedreht. Nachfolgend werden die Halteelemente 101, 102 voneinander weg bewegt, um das Werkstück Wc wieder frei zu geben.

Das freigegebene Werkstück Wc kann wieder in Richtung der Auflageeinrichtung 15c bewegt werden, um ggf. mit einer weiteren Beschichtung versehen zu werden.

## Patentansprüche

1. Vorrichtung (1, 1a, 1b, 1c) zum Auftragen eines Haftmittels auf ein Werkstück, insbesondere auf eine Breitfläche eines Werkstücks, aufweisend:
eine Auflageeinrichtung (15, 15a, 15b, 15c) zum Aufnehmen eines Werkstücks und eine Haftmittelauftragseinrichtung (10, 10a, 10b), wobei die Haftmittelauftragseinrichtung (10, 10a, 10b)
eine Auftragswalze (11, 11a, 11b) zum Auftragen eines Haftmittels auf dem an der Auflageeinrichtung (15, 15a, 15b, 15c) aufgenommenen Werkstück und
eine erste Dosiereinrichtung (13, 13a, 13b) zum Dosieren des Haftmittels an der Auftragswalze aufweist,
**dadurch gekennzeichnet, dass** die Haftmittelauftragseinrichtung (10, 10a, 10b) entlang der Auflageeinrichtung (15, 15a, 15b, 15c) bewegbar ist.

2. Vorrichtung (1, 1a, 1b, 1c) gemäß Anspruch 1, wobei die erste Dosiereinrichtung (13, 13a, 13b) als Dosierwalze ausgebildet ist, die bevorzugt eingerichtet ist, mit der Auftragswalze (11, 11a, 11b) ein Haftmittelreservoir (L, La, L1b) auszubilden.

3. Vorrichtung (1, 1a, 1b, 1c) gemäß Anspruch 1 oder 2, **dadurch gekennzeichnet, dass** die Auflageeinrichtung (15) eine Halteeinrichtung, insbesondere eine Unterdruckeinrichtung, einen Greifer oder eine Klemmbacke zum Halten des Werkstücks (W, Wa, W1b, W2b, Wc) aufweist.

4. Vorrichtung (1, 1a, 1b, 1c) gemäß einem der vorangegangenen Ansprüche, **dadurch gekennzeichnet, dass** die Haftmittelauftragseinrichtung (10) relativ zur Auflageeinrichtung (15, 15a, 15b, 15c) anhebbar oder absenkbar ist, wobei bevorzugt ist, dass zum Anheben oder Absenken eine pneumatisch betriebene oder hydraulisch betriebene Einrichtung vorgesehen ist.

5. Vorrichtung (1a) gemäß einem der vorangegangenen Ansprüche, ferner umfassend eine Presseinrichtung (20a) zum Anpressen des Beschichtungsmaterials an dem an der Auflageeinrichtung aufgelegten Werkstück (W, Wa), wobei bevorzugt ist, dass die Presseinrichtung (20a) zum Anpressen des Beschichtungsmaterials entlang der Auflageeinrichtung (15a) bewegbar ist.

6. Vorrichtung (1a) gemäß Anspruch 5, ferner umfassend eine eine Auflegevorrichtung (24a) zum Auflegen eines Beschichtungsmaterials (Ba) auf das Werkstück (Wa), wobei bevorzugt ist, dass die Auflegevorrichtung (24a) in ein Gehäuse (25a) einrollbar ist, wobei ferner bevorzugt ist, dass das Gehäuse (25a) an der Haftmittelauftragseinrichtung (10a) angebracht ist,
wobei weiter bevorzugt ist, dass die Auflegevorrichtung (24a) mit der Haftmittelauftragseinrichtung (10a) und der Presseinrichtung (20a) in Verbindung steht.

7. Vorrichtung (1c) gemäß einem der vorangegangenen Ansprüche, ferner umfassend eine Wendevorrichtung (100), die eingerichtet ist, ein Werkstück um 180° zu drehen, wobei die Wendevorrichtung (100) bevorzugt eingerichtet ist, das Werkstück in Richtung der Haftmittelauftragseinrichtung zu bewegen.

8. Vorrichtung (1b) gemäß einem der vorangegangenen Ansprüche, **dadurch gekennzeichnet, dass** die Haftmittelauftragseinrichtung (10b) eine zweite Dosiereinrichtung (14b), insbesondere zweite Dosierwalze, aufweist, wobei bevorzugt ist, dass die zweite Dosiereinrichtung (14b) eingerichtet ist, mit der Auftragswalze (11b) ein zweites Haftmittelreservoir (L2b) auszubilden.

9. Verfahren zum Auftragen eines Haftmittels auf ein Werkstück, insbesondere auf die Breitfläche eines Werkstücks, aufweisend:
Aufnehmen eines Werkstücks (W, Wa, W1b, W2b, Wc) auf einer Auflageeinrichtung (15, 15a, 15b, 15c), wobei eine Haftmittelauftragseinrichtung (10, 10a, 10b) bereitgestellt, die
eine Auftragswalze (11, 11a, 11b) zum Auftragen eines Haftmittels auf dem am Auflagetisch (15, 15a, 15b, 15c) aufgenommenen Werkstück und
eine erste Dosiereinrichtung (13, 13a, 13b) zum Dosieren des Haftmittels an der Auftragswalze aufweist,
Bewegen der Haftmittelauftragseinrichtung (10, 10a, 10b) entlang der Auflageeinrichtung (15, 15a, 15b, 15c).

10. Verfahren gemäß Anspruch 9, wobei die erste Dosiereinrichtung (13, 13a, 13b) als Dosierwalze ausgebildet ist, die bevorzugt eingerichtet ist, mit der Auftragswalze (11, 11a, 11b) ein Haftmittelreservoir (L, La) auszubilden.

11. Verfahren gemäß Anspruch 9 oder 10, **dadurch gekennzeichnet, dass** die Haftmittelauftragseinrichtung (10, 10a, 10b) vor dem Auftragen des Haftmittels relativ zur Auflageeinrichtung (15) angehoben oder abgesenkt wird, wobei bevorzugt ist, dass zum Anheben oder Absenken eine pneumatisch betriebenen Einrichtung vorgesehen ist.

12. Verfahren gemäß einem der Ansprüche 9-11, **dadurch gekennzeichnet, dass** ein Beschichtungsmaterial (Ba) auf die mit dem Haftmittel versehene Seite des Werkstücks (Wa) aufgebracht wird.

13. Verfahren gemäß einem der Ansprüche 9-12, **dadurch gekennzeichnet, dass** zum Aufbringen des Beschichtungsmaterials (Ba) eine Presseinrichtung (20a) verwendet wird, wobei bevorzugt ist, dass die Presseinrichtung (20a) zum Anpressen des Beschichtungsmaterials entlang der Auflageeinrichtung (15a) bewegbar ist.

14. Verfahren gemäß einem der Ansprüche 9-13, **dadurch gekennzeichnet, dass** das mit dem Beschichtungsmaterial (Ba) versehene Werkstück (Wa) um 180° mittels einer Wendevorrichtung (100) gedreht wird.

15. Verfahren gemäß einem der Ansprüche 9-14, **dadurch gekennzeichnet, dass** das Werkstück zumindest abschnittsweise aus Holz, Holzwerkstoff oder Verbundmaterial gefertigt ist.
